# EUROPÄISCHE PATENTSCHRIFT

(11) **EP 1 318 040 B1**
(45) Veröffentlichungstag und Bekanntmachung des Hinweises auf die Patenterteilung: **30.12.2009**
(21) Anmeldenummer: 02025331.6
(22) Anmeldetag: 13.11.2002
(51) Int. Cl.: B60J 7/12, B60J 10/10

(54) **Faltverdeck für ein Kraftfahrzeug**
Foldable top for a vehicle
Toit pliant pour un véhicule

(30) Priorität: 07.12.2001 DE 10160240
(43) Veröffentlichungstag der Anmeldung: 11.06.2003
(73) Patentinhaber: Webasto Vehicle Systems International GmbH, 82131 Stockdorf (DE)
(72) Erfinder: Antreich, Michael, 82110 Germering (DE)
(74) Vertreter: Konnerth, Dieter Hans

(56) Entgegenhaltungen:
- EP-A- 0 949 101
- EP-A- 1 127 725
- DE-A- 10 051 436
- DE-A- 19 613 356
- US-A- 3 411 821

## Beschreibung

Die Erfindung betrifft ein Faltverdeck eines Kraftfahrzeugs mit einem Verdeckgestell, das seitlich ein vorderes, ein mittleres und ein hinteres Rahmenteil aufweist, von denen das mittlere Rahmenteil über eine Hauptlagereinrichtung an der Karosserie verstellbar gelagert ist und das vordere Rahmenteil über eine Lenkereinrichtung, die einen vorderen Lenker, einen hinteren Lenker und einen Zwischenlenker aufweist, gegenüber dem mittleren Rahmenteil verstellbar ist.

Aus der EP 1 127 725 A2 ist ein derartiges Faltverdeck bekannt geworden, bei dem der vordere Lenker unmittelbar das vordere Rahmenteil mit dem mittleren Rahmenteil verbindet und der hintere Lenker zwischen dem vorderen Rahmenteil und dem Zwischenlenker gelenkig gelagert ist. In der Ablagestellung ist der vordere Lenker, dessen Gelenkverbindung am Vorderende des mittleren Rahmenteils angeordnet ist, nach hinten geschwenkt. Wenn das mittlere Rahmenteil in der Ablagestellung seitlich neben einem Fahrzeugsitz zu liegen kommt, erfordert der innen liegende vordere Lenker zusätzlichen Bauraum seitlich in Richtung zum Schulterbereich einer im Fahrzeugsitz sitzenden Person.

Der Erfindung liegt die Aufgabe zugrunde, ein eingangs genanntes Faltverdeck mit einem verbesserten und vereinfachten Aufbau zum Einstellen unterschiedlicher Dachstellungen und einer verbesserten Ablagestellung, insbesondere für eine größere Schulterfreiheit auf einem dem abgelegten Faltverdeck benachbarten Sitz, zu schaffen.

Die Aufgabe wird bei dem oben genannten Faltverdeck erfindungsgemäß dadurch gelöst, daß der vordere Lenker am vorderen Rahmenteil und am Vorderabschnitt des Zwischenlenkers schwenkbar angelenkt ist, daß der hintere Lenker am vorderen Rahmenteil und am mittleren Rahmenteil schwenkbar angelenkt ist, und daß der Zwischenlenker mit dem hinteren Lenker mittels eines Gelenks schwenkbar verbunden ist und an seinem Hinterabschnitt mit der Hauptlagereinrichtung schwenkbar verbunden ist. Da nur der hintere Lenker der das vordere Rahmenteil lagernden Lenkereinrichtung an dem mittleren Rahmenteil gelagert ist, kann das mittlere Rahmenteil kürzer gebildet werden, insbesondere wenn der Antrieb über den vor der Hauptsäule am mittleren Rahmenteil angelenkten Hauptlenker erfolgt.

Dieser Vorteil zeigt sich insbesondere dann, wenn das mittlere Rahmenteil einen Dichtungsträger aufweist, der am mittleren Rahmenteil verschwenkbar gelagert ist und beim Ablegen des Faltverdecks mit seinem Vorderende in Querrichtung insbesondere auswärts schwenkt. Während der Dichtungsträger im Schließzustand bündig an einen Dichtungsträger am vorderen Rahmenteil und an einen Dichtungsträger am hinteren Rahmenteil anschließt, kann das mittlere Rahmenteil deutlich kürzer gebildet sein. Das abgelegte Faltverdeck kann in einer bezüglich der Fahrzeuglängsrichtung günstigen Position in kurzer Längserstreckung hinter den Sitzen abgelegt werden. Die seitlich ausgeschwenkten Dichtungsträger können neben den Sitzen abgelegt werden und gestatten somit eine größere Sitzbreite.

Vorteilhafte Ausgestaltungen der Erfindung sind in den Unteransprüchen angegeben.

Eine Verstellung des Dichtungsträgers erfolgt bevorzugt über eine Zwangskopplung mit dem hinteren Lenker bei dessen Schwenkbewegung. Die Zwangskopplung wird zweckmäßigerweise durch eine beidseitig gelenkig gelagerte Koppelstange erreicht, die durch eine exzentrische Anlenkung die Schwenkbewegung in einfacher betriebssicherer Weise ausführt.

Nachfolgend wird das Faltverdeck anhand eines Ausführungsbeispiels unter Bezugnahme auf die Zeichnungen näher erläutert. Es zeigt:
- Fig. 1: in einer Seitenansicht in schematischer Teildarstellung ein Faltverdeck eines Cabriolets in geschlossener Stellung;
- Fig. 2: in einer Seitenansicht in schematischer Teildarstellung das Faltverdeck während des Öffnungsvorganges;
- Fig. 3: in einer Seitenansicht in schematischer Teildarstellung das geöffnete und abgelegte Faltverdeck;

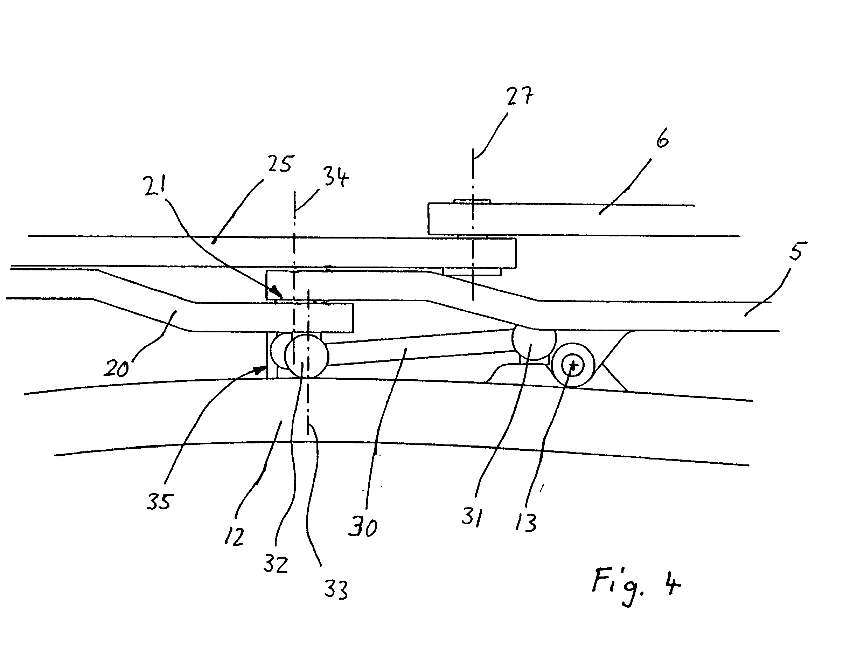

- Fig. 4: in einer Draufsicht einen Schwenkmechanismus des Verdeckgestänges des Faltverdecks bei geschlossenem Faltverdeck;
- Fig. 5: in einer Draufsicht den in Fig. 4 dargestellten Schwenkmechanismus bei geöffnetem Faltverdeck;
- Fig. 6: in einer Seitenansicht den in Fig. 4 dargestellten Schwenkmechanismus bei geschlossenem Faltverdeck; und
- Fig. 7: in einer Draufsicht das geöffnete und abgelegte Faltverdeck.

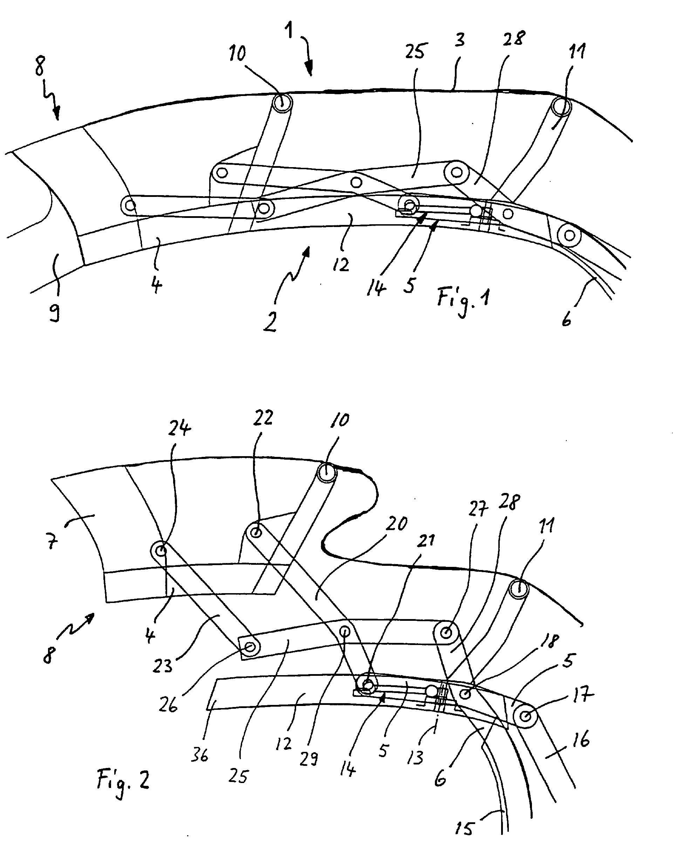

Ein Faltverdeck 1 eines Kraftfahrzeugs weist ein Verdeckgestell 2 und einen vom Verdeckgestell 2 gehaltenen Verdeckstoff 3 auf. Das Verdeckgestell 2 ist symmetrisch zu einer vertikalen Fahrzeuglängsmittelebene aufgebaut und enthält auf beiden Seiten jeweils ein vorderes Rahmenteil 4, ein mittleres Rahmenteil 5 und ein hinteres Rahmenteil 6, die in der in Fig. 1 dargestellten Schließstellung des Faltverdecks 1 im wesentlichen entlang eines Oberrandes der zumindest einen Seitenscheibe des Fahrzeugs verlaufen.

Die beiden seitlich gegenüberliegenden vorderen Rahmenteile 4, die als Dichtungsträger für eine jeweilige Dichtung gebildet sind, sind mittels eines Frontspriegels 7 miteinander starr verbunden und bilden mit dem Frontspriegel 7 ein Dachvorderteil oder eine Dachspitze 8, die in Schließstellung an einem Windlauf 9 des Fahrzeugs anliegt und daran verriegelt gehalten ist. Das Hinterende der Dachspitze 8 wird von einem Stützspriegel 10 gebildet, der die beiden vorderen Rahmenteile 4 an ihren Hinterenden miteinander fest verbindet. Der Verdeckstoff 3 überdeckt den Frontspriegel 7 oder er ist am Hinterende des Frontspriegels 7 bündig zu dessen Oberfläche angesetzt und nach hinten über den Stützspriegel 10 gespannt. Alternativ kann die gesamte Dachspitze 8 einschließlich der beiden vorderen Rahmenteile 4 ein starres Bauteil sein und der Verdeckstoff 3 ist über die gesamte feste Dachspitze 8 gespannt oder er beginnt am Hinterende der Dachspitze 8 bzw. am Stützspriegel 10.

Die beiden seitlich gegenüberliegenden mittleren Rahmenteile 5 sind über einen Hauptspriegel 11 starr miteinander verbunden, über den zumindest im Schließzustand der Verdeckstoff 3 gespannt ist. Am mittleren Rahmenteil 5 ist ein Dichtungsträger 12 um eine Schwenkachse 13, die im wesentlichen vertikal zur Längserstreckung des Dichtungsträgers 12 verläuft, schwenkbar gelagert und mittels einer Verstelleinrichtung 14 in ihrer Schwenkstellung verstellbar.

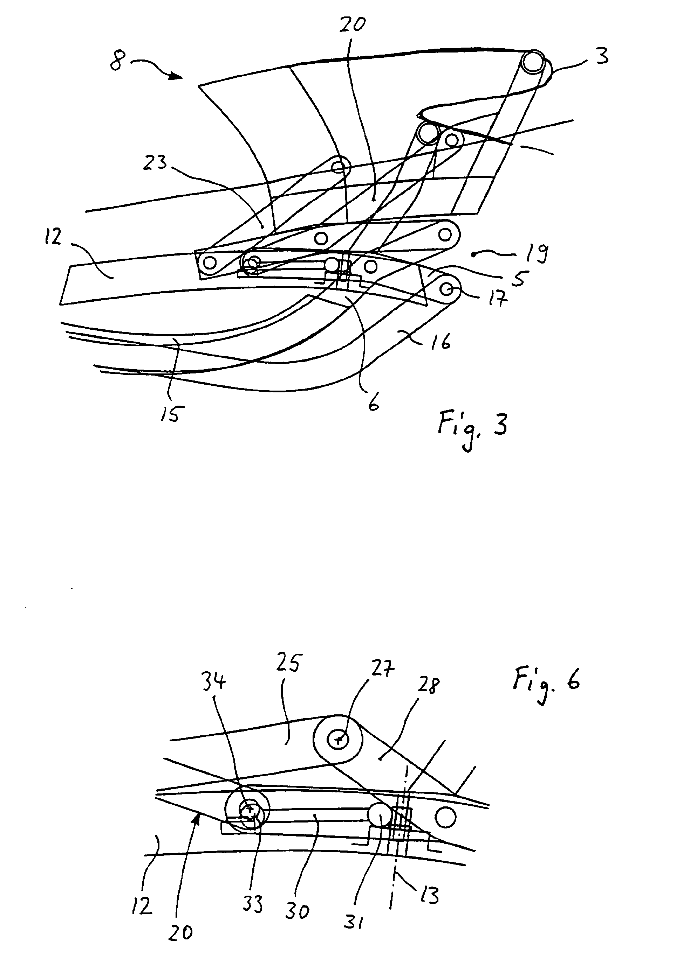

Das hintere Rahmenteil 6, das ebenfalls einen Dichtungsträger 15 enthält, stellt einen Hauptlenker eines das mittlere Rahmenteil 5 an der Karosserie schwenkbar lagernden Viergelenks dar. Eine Hauptsäule 16 des Viergelenks und der Hauptlenker bzw. das hintere Rahmenteil 6 sind einerseits in bekannter Weise an der Fahrzeugkarosserie schwenkbar gelagert (nicht dargestellt) und andererseits am Hinterende des mittleren Rahmenteils 5 in einem Gelenk 17 (Hauptsäule 16) bzw. in einem vom Hinterende beabstandeten Gelenk 18 (Hauptlenker 6) schwenkbar gelagert, so daß das mittlere Rahmenteil 5 in bekannter Parallelversetzung nach hinten in einen Verdeckkasten 19 (Fig. 3) oder allgemein in eine rückseitige Ablagestellung bewegbar ist.

Am Vorderende des mittleren Rahmenteils 5 ist ein hinterer Lenker 20 einer die Dachspitze 8 lagernden Lenkereinrichtung in einem Gelenk 21 schwenkbar gelagert. Das gegenüberliegende Ende des hinteren Lenkers 20 ist mit einem Gelenk 22 am Hinterabschnitt der Dachspitze 8 schwenkbar angelenkt. Ein vorderer Lenker 23 der Lenkereinrichtung ist einerseits an der Dachspitze 8 in einem Gelenk 24 und andererseits am Vorderende eines Zwischenlenkers 25 in einem Gelenk 26 schwenkbar angebracht. Der Zwischenlenker 25 ist an seinem Hinterende mittels eines Gelenks 27 an einem Steuerabschnitt 28 des Hauptlenkers 6 angelenkt, der sich über das Gelenk 18 des Hauptlenkers am mittleren Rahmenteil 5 hinaus erstreckt. Zusätzlich sind der Zwischenlenker 25 und der hintere Lenker 20 mittels eines Gelenks 29 miteinander schwenkbar verbunden.

Zum Verstellen des Faltverdecks 1 zwischen seiner Schließstellung (Fig. 1) und seiner abgelegten Offenstellung (Fig. 3) wird z. B. die Hauptsäule 16 des Viergelenks über eine Antriebseinrichtung verschwenkt, wodurch das mittlere Rahmenteil 5 in bekannter Parallelverschiebung in den Verdeckkasten 19 bewegt wird. Beim Verschwenken des Viergelenks zieht der Steuerabschnitt 28 des Hauptlenkers 6 den Zwischenlenker 25 nach hinten, der wiederum den hinteren Lenker 20 um sein unteres Gelenk 21 nach hinten verschwenkt. Der nach hinten verschwenkende hintere Lenker 20 verschwenkt über die ein Viergelenk (Gelenke 22, 24, 26, 29) bildende Lenkereinrichtung (Lenker 20 und 23) die Dachspitze 8 nach hinten in Richtung zum Hauptspriegel 11 oder über ihn, wobei der Verdeckstoff 3 zumindest vor dem Hauptspriegel 11 entspannt wird. In der Ablagestellung (Fig. 3) bildet die Dachspitze 8 eine gleichsinnig gekrümmte oder gleichbombierte Abdeckung des Verdeckgestells 2, so daß eine Verdeckklappe nicht erforderlich ist.

Die Verstelleinrichtung 14 für den Dichtungsträger 12 enthält eine Koppelstange 30, die einerseits mit einem Gelenk 31, das an der Innenseite des Dichtungsträgers 12 benachbart zur Schwenkachse 13 des Dichtungsträgers 12 angeordnet ist, und andererseits mit einem Gelenk 32 verbunden ist, das am Unterende des hinteren Lenkers 20 angebracht ist und dessen Schwenkachse 33 parallel und versetzt zur Schwenkachse 34 des Gelenks 21 des Hinteren Lenkers am mitteren Rahmenteils 5 angeordnet ist. Zwischen dem Vorderende des mittleren Rahmenteils 5 und dem Dichtungsträger 12 ist des weiteren eine Führung 35 für den Dichtungsträger 12 vorgesehen.

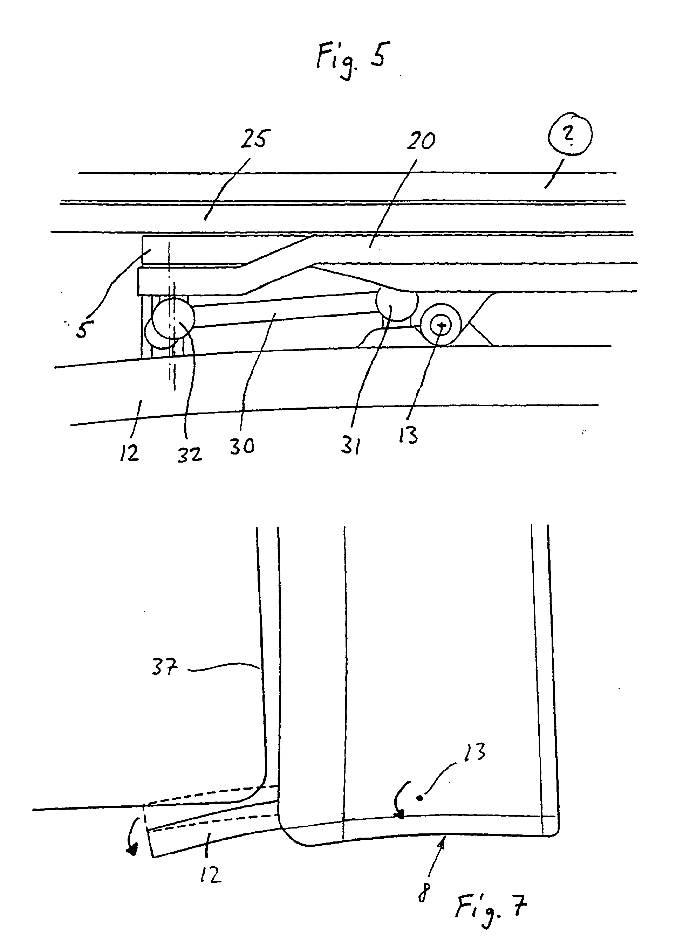

In Schließstellung des Faltverdecks 1 (Fig. 1 und 6) ist die Schwenkachse 33 des Gelenks 32 zwischen Koppelstunge 30 und hinteren Lenker 20 derart positioniert, daß eine Öffnungsbewegung des Verdeckgestells 3 und damit des hinteren Lenkers 20 das Gelenk 32 auf einer Kreisbahn um die Schwenkachse 34 nach vorne bewegt. Über die somit nach vorne gezogene Koppelstange 30 und das um die Schwenkachse 13 des Dichtungsträgers nach außen schwenkende Gelenk 31 zwischen Koppelstunge 30 und Dichtungsträger 12 wird der Dichtungsträger 12 mit seinem Vorderende 36 nach außen geschwenkt. Die maximale Verschwenkung des Vorderendes 36 nach außen ist in der Ablagestellung des Faltverdecks (Fig. 7) erreicht. Da der Dichtungsträger 12 seitlich neben einer Rücklehne 37 zu liegen kommt, gestatten die beiden gegenüberliegenden ausgeschwenkten Dichtungsträger 12 eine größere Breite der Rücklehne 37 und damit ein verbessertes Platz- bzw. Raumangebot im Schulterbereich auf den Sitzen bzw. Fondsitzen im Fahrzeug.

### Bezugszeichenliste

- 1: Faltverdeck
- 2: Verdeckgestell
- 3: Verdeckstoff
- 4: vorderes Rahmenteil
- 5: mittleres Rahmenteil
- 6: hinteres Rahmenteil, Hauptlenker
- 7: Frontspriegel
- 8: Dachspitze
- 9: Windlauf
- 10: Stützspriegel
- 11: Hauptspriegel
- 12: Dichtungsträger
- 13: Schwenkachse
- 14: Verstelleinrichtung
- 15: Dichtungsträger
- 16: Hauptsäule
- 17: Gelenk
- 18: Gelenk

- 19: Verdeckkasten
- 20: hinterer Lenker
- 21: Gelenk
- 22: Gelenk
- 23: vorderer Lenker
- 24: Gelenk
- 25: Zwischenlenker
- 26: Gelenk
- 27: Gelenk
- 28: Steuerabschnitt
- 29: Gelenk
- 30: Koppelstange
- 31: Gelenk
- 32: Gelenk
- 33: Schwenkachse
- 34: Schwenkachse
- 35: Führung
- 36: Vorderende des Dichtungsträgers
- 37: Rücklehne

## Patentansprüche

1. Faltverdeck eines Kraftfahrzeugs mit einem Verdeckgestell, das seitlich ein vorderes (4), ein mittleres (5) und ein hinteres Rahmenteil (6) aufweist, von denen das mittlere Rahmenteil (5) über eine Hauptlagereinrichtung an der Karosserie verstellbar gelagert ist und das vordere Rahmenteil (4) ber eine Lenkereinrichtung, die einen vorderen Lenker (23), einen hinteren Lenker (20) und einen Zwischenlenker (25) aufweist, gegenüber dem mittleren Rahmenteil (5) verstellbar ist,
**dadurch gekennzeichnet,**
**daß** der vordere Lenker (23) am vorderen Rahmenteil (4) und am Vorderabschnitt des Zwischenlenkers (25) schwenkbar angelenkt ist, daß der hintere Lenker (20) am vorderen Rahmenteil (4) und am mittleren Rahmenteil (5) schwenkbar angelenkt ist, und daß der Zwischenlenker (25) mit dem hinteren Lenker (23) mittels eines Gelenks (29) schwenkbar verbunden ist und an seinem Hinterabschnitt mit der Hauptlagereinrichtung (6, 28) schwenkbar verbunden ist.

2. Faltverdeck nach Anspruch 1,
**dadurch gekennzeichnet, daß** das mittlere Rahmenteil (5) einen Dichtungsträger (12) aufweist, der am mittleren Rahmenteil (5) verschwenkbar gelagert ist und beim Ablegen des Faltverdecks (1) mit seinem Vorderende (36) in Fahrteugquerrichtung insbesondere auswärts schwenkt.

3. Faltverdeck nach Anspruch 2,
**dadurch gekennzeichnet, daß** eine Verstellung des Dichtungsträgers (12) über eine Zwangskopplung (14) mit dem hinteren Lenker (20) bei dessen Schwenkbewegung erfolgt.

4. Faltverdeck nach Anspruch 3,
**dadurch gekennzeichnet, daß** eine Koppelstange (30) den Dichtungsträger (12) und den hinteren Lenker (20) verbindet, die am Dichtungsträger (12) exzentrisch zu dessen Schwenkachse (13) und am hinteren Lenker (20) exzentrisch zu dessen Schwenkachse (34) am mittleren Rahmenteil (5) angelenkt ist.

5. Faltverdeck nach einem der Ansprüche 2 bis 4,
**dadurch gekennzeichnet, daß** der Dichtungsträger (12) das mittlere Rahmenteil (5) nach vorne überragt.

6. Faltverdeck nach einem der Ansprüche 1 bis 5,
**dadurch gekennzeichnet, daß** die einen Viergelenkmechanismus bildende Hauptlagereinrichtung einen einen hinteren Dichtungsträger (15) enthaltenden Hauptlenker (6) aufweist, der am mittleren Rahmenteil (5) in einem Gelenk (18) schwenkbar angelenkt ist und an seinem über dieses Gelenk (18) hinausstehenden Steuerabschnitt (28) mit dem Zwischenlenker (15) gelenkig verbunden ist.

## Claims

1. Foldable top for a vehicle, with a top framework which laterally has a front frame part (4), a central frame part (5) and a rear frame part (6), of which the central frame part (5) is mounted adjustably on the bodywork via a main bearing device, and the front frame part (4) is adjustable in relation to the central frame part (5) via a link device which has a front link (23), a rear link (20) and an intermediate link (25), **characterized in that** the front link (23) is coupled pivotably to the front frame part (4) and to the front section of the intermediate link (25), **in that** the rear link (20) is coupled pivotably to the front frame part (4) and to the central frame part (5), and **in that** the intermediate link (25) is connected pivotably to the rear link (20) by means of a joint (29) and the rear section of which intermediate link is connected pivotably to the main bearing device (6, 28).

2. Foldable top according to Claim 1, **characterized in that** the central frame part (5) has a seal carrier (12) which is mounted pivotably on the central frame part (5) and the front end (36) of which seal carrier pivots in the transverse direction of the vehicle, in particular outwards, as the folding top (1) is being put away.

3. Foldable top according to Claim 2, **characterized in that** the seal carrier (12) is adjusted during the pivoting movement of the rear link (20) via a forced coupling (14) thereto.

4. Foldable top according to Claim 3, **characterized in that** a coupling rod (30) connects the seal carrier (12) and the rear link (20), said coupling rod being coupled to the seal carrier (12) eccentrically with respect to the pivot axis (13) thereof and being coupled to the rear link (20) eccentrically with respect to the pivot axis (34) thereof on the central frame part (5).

5. Foldable top according to one of Claims 2 to 4, **characterized in that** the seal carrier (12) projects forwards over the central frame part (5).

6. Foldable top according to one of Claims 1 to 5, **characterized in that** the main bearing device which forms a four-bar mechanism has a main link (6) which contains a rear seal carrier (15), is coupled pivotably to the central frame part (5) in a joint (18) and the control section (28) of which main link, the control section projecting beyond said joint (18), is connected in an articulated manner to the intermediate link (15).

## Revendications

1. Toit pliant de véhicule automobile avec un châssis de toit qui présente en côté une partie d'encadrement avant (4), centrale (5) et arrière (6) parmi lesquelles la partie d'encadrement centrale (5) est disposée de façon mobile sur la carrosserie via un dispositif de palier principal et la partie d'encadrement avant (4) peut être déplacée par rapport à la partie d'encadrement centrale (5) via un dispositif de bras de liaison présentant un bras de liaison avant (23), un bras de liaison arrière (20) et un bras de liaison intermédiaire (25), **caractérisé en ce que :**
le bras de liaison avant (23) est articulé de façon pivotante au niveau de la partie d'encadrement avant (4), au niveau du segment avant et au niveau du bras de liaison intermédiaire (25) ;
le bras de liaison arrière (20) est articulé de façon pivotante au niveau de la partie d'encadrement avant (4) et au niveau de la partie d'encadrement centrale (5) ; et
le bras de liaison intermédiaire (25) est relié de façon pivotante au bras de liaison (23) arrière à l'aide d'une articulation (29) et est relié de façon pivotante au dispositif de palier principal (6, 28) au niveau de son segment arrière.

2. Toit pliant selon la revendication 1,
**caractérisé en ce que** la partie d'encadrement centrale (5) comporte un support d'étanchéité (12) disposé de façon pivotante au niveau de la partie d'encadrement centrale (5) et **en ce qu'**elle pivote notamment vers l'extérieur lors du rangement du toit pliant (1) avec son extrémité avant (36) dans la direction du véhicule.

3. Toit pliant selon la revendication 2,
**caractérisé en ce qu'**un réglage du support d'étanchéité (12) se produit via un couplage de force (14) avec le bras de liaison arrière (20) lorsque celui-ci effectue un mouvement de pivotement.

4. Toit pliant selon la revendication 3,
**caractérisé en ce qu'**une tige de couplage (30) relie le support d'étanchéité (12) et le bras de liaison arrière (20), ladite tige étant articulée de façon excentrée au niveau du support d'étanchéité (12) par rapport à son axe de pivotement (13) et de façon excentrée au niveau du bras de liaison arrière (20) par rapport à son axe de pivotement (34), au niveau de la partie d'encadrement centrale (5).

5. Toit pliant selon l'une quelconque des revendications 2 à 4, **caractérisé en ce que** le support d'étanchéité (12) dépasse de la partie d'encadrement centrale (5) vers l'avant.

6. Toit pliant selon l'une quelconque des revendications 1 à 5, **caractérisé en ce que** le dispositif de palier principal formant un mécanisme à quatre articulations comporte un bras de liaison principal (6) contenant un support d'étanchéité arrière (15) qui est articulé de façon pivotante au niveau de la partie d'encadrement (5) centrale dans une articulation (18) et est relié de façon articulée à son segment de commande (28) saillant via cette articulation (18) avec le bras de liaison intermédiaire (15).
